# EUROPÄISCHE PATENTANMELDUNG

(11) **EP 1 726 492 A2**
(43) Veröffentlichungstag der Anmeldung: **29.11.2006**
(21) Anmeldenummer: 06009746.6
(22) Anmeldetag: 11.05.2006
(51) Int. Cl.: B60R 21/231

(54) **Gassack**

(30) Priorität: 24.05.2005 DE 202005008147 U
(71) Anmelder: TRW Automotive Safety Systems GmbH, 63743 Aschaffenburg (DE)
(72) Erfinder: Britz, Thomas, Dr., 63856 Bessenbach (DE); Magoley, Marcus, Dr., 63739 Aschaffenburg (DE); Orth, Lothar, 63741 Aschaffenburg (DE); Schütz, Dominik, 63857 Waldaschaff (DE); Krist, Andreas, 63868 Grosswallstadt (DE)
(74) Vertreter: Sulzbach, Werner

(57) **Zusammenfassung**

Die Erfindung betrifft einen Gassack (1) zur Verwendung in einer Fahrzeuginsassen-Rückhalteeinrichtung, mit einem Wandungsteil (3) aus einem unbeschichteten Gewebe sowie einer auf einen Abschnitt des Wandungsteils (3) aufgebrachten Hitzeschutzvorrichtung (11). Die Hitzeschutzvorrichtung (11) ist aus wenigsten einer Lage eines weiteren unbeschichteten Gewebes (13) gebildet und mit dem Wandungsteil (3) unter Verwendung eines flammhemmenden Klebstoffs (15) verklebt.

## Beschreibung

Die Erfindung betrifft einen Gassack zur Verwendung in einem Fahrzeuginsassen-Rückhaltesystem.

Gassackgewebe bestehen im allgemeinen aus Polyamiden, beispielsweise Polyamid 6 oder Polyamid 6.6. Zum Schutz vor den bei der Aktivierung des Gasgenerators freigesetzten und auf das Gassackgewebe auftreffenden heißen Gasen und Partikeln werden die Gewebe üblicherweise mit einer Silikonbeschichtung versehen. Diese beschichteten Gewebe weisen jedoch ein hohes Flächengewicht auf und lassen sich schlecht falten. Daher werden die Gassäcke für Fahrzeuginsassen-Rückhaltesysteme heute zunehmend aus unbeschichteten Geweben hergestellt. Bei diesen Gassäcken müssen jedoch die thermisch hoch belasteten Wandungsteile, wie die an die Einblasöffnung angrenzenden Bereiche des Gassackgewebes, durch besondere Maßnahmen vor einer Beschädigung durch heiße Gase und Partikel geschützt werden.

Die DE 43 35 809 A1 beschreibt einen Gassack mit einer am rückwärtigen Ende des Gassacks angeordneten Einblasöffnung zur Aufnahme eines Gasgenerators sowie einer aus einem nicht entflammbaren Tuch bestehende wärmebeständige Abdeckung, die mit dem Umfangsrand der Einblasöffnung vernäht ist. Die Abdeckung kann insbesondere ein Tuch aus Silikonkautschuk sein.

Die Erfindung stellt demgegenüber einen Gassack bereit, bei dem eine Beschädigung des Gassackgewebes durch heiße Gase und Partikel mit Hilfe von einfachen und kostengünstigen Maßnahmen zuverlässig verhindert wird.

Der erfindungsgemäße Gassack ist zur Verwendung in einer Fahrzeuginsassen-Rückhalteeinrichtung vorgesehen und umfaßt einen Wandungsteil aus einem unbeschichteten Gewebe sowie eine auf dem Wandungsteil aufgebrachte Hitzeschutzvorrichtung. Die Hitzeschutzvorrichtung ist aus wenigstens einer Lage eines weiteren unbeschichteten Gewebes gebildet und mit dem Wandungsteil unter Verwendung eines flammhemmenden Klebstoffs verklebt.

Der Vorteil der Erfindung liegt also darin, daß der Klebstoff selbst als Flammschutz eingesetzt wird. Es muß deshalb kein Gewebe verwendet werden, welches durch Beschichtung oder andere technische Maßnahmen gegen eine Beschädigung durch die auftreffenden heißen Gase oder Partikel geschützt ist. Da für das Gassackgewebe und das Gewebe der Hitzeschutzvorrichtung das gleiche unbeschichtete Material verwendet werden kann, ist auch die Wiederverwertbarkeit des Gewebematerials verbessert. Die unbeschichteten Gewebe sind zudem kostengünstiger und lassen sich aufgrund ihrer besseren Flexibilität leichter falten.

Der flammhemmende Klebstoff umfaßt bevorzugt eine Polymerzusammensetzung auf der Grundlage von Polyurethan. Es können jedoch auch andere bekannte Klebstoffe verwendet werden, die mit den üblicherweise für die Gassackgewebe verwendeten Polyamiden kompatibel sind.

Der Klebstoff kann durch Beimischen bekannter Flammschutzmittel, wie beispielsweise organische Halogenverbindungen oder Phosphorverbindungen flammhemmend ausgerüstet sein.

Ganz besonders bevorzugt umfaßt der flammhemmende Klebstoff jedoch eine Polymermatrix, beispielsweise aus Polyurethan, mit darin verteilten exfolierten Schichtsilikatpartikeln als Flammschutzmittel, wobei die exfolierten Schichtsilikatpartikel eine Dicke von 0,5 bis 2 nm und einen Flächendurchmesser von bis zu 10 µm aufweisen. Das Eincompoundieren von Schichtsilikaten in die Polymermatrix des Klebstoffs unter Bildung von exfolierten plättchenförmigen Schichtsilikatpartikeln bewirkt neben einer erhöhten mechanischen Festigkeit und Temperaturwechselbeständigkeit auch eine deutliche Verbesserung der flammhemmenden Eigenschaften und der Barrierewirkung gegenüber Gasen und Flüssigkeiten. Die anorganischen Schichtsilikatpartikel sind außerdem ungiftig und daher toxikologisch unbedenklich.

Die exfolierten Schichtsilikatpartikel liegen bevorzugt in einem Anteil von 0,5 bis 10 Gew.-Teilen, besonders bevorzugt von 1 bis 6 Gew.-Teilen pro 100 Gew.-Teilen der Polymermatrix des flammhemmenden Klebstoffs vor. Als Schichtsilikate können natürliche oder synthetische Zweischicht- oder Dreischichtsilikate eingesetzt werden, die zum Ionenaustausch geeignet sind. Typische Vertreter sind Montmorrilonit, Saponit, Beidelit, Nontronit, Sauconit, Stevensonit und Hektorit, Bentonit, Vermiculit, Halloysit, Kaolin, Calciummethasilikat oder Smektit sowie chlorierte oder fluorierte synthetische Derivate dieser Mineralien, wie Fluorosmektit. Die Schichtsilikate weisen bevorzugt eine lonenaustauschkapazität von mindestens 20 bis 200 meq/100 g (Milliäquivalente bezogen auf 100 g Feststoffgehalt) auf. Die lonenaustauschkapazität gibt die Konzentration an Ionen an, die durch Lösungen neutraler Salze von der Schichtsilikatoberfläche durch einen stöchiometrischen lonenaustauschmechanismus substituierbar sind.

Die Oberfläche der Schichtsilikatpartikel kann durch lonenaustausch mit organischen Oniumverbindungen, wie beispielsweise Ammoniumverbindungen (NR₄⁺), Phosphoniumverbindungen (PR₄⁺), Oxoniumverbindungen (R₃O⁺), Diazoniumverbindungen RN₂⁺, Arsoniumverbindungen (AsR₄⁺) und Sulfoniumverbindungen (R₃S⁺), hydrophobiert sein. Die Reste R der organischen Oniumverbindung können gleich oder verschieden sein und sind aus der aus Wasserstoff, substituierten und unsubstituierten, gesättigten und ungesättigten Alkylgruppen mit 1 bis 40 Kohlenstoffatomen mit oder ohne Verzweigung und substituierten und unsubstituierten Arylgruppen und Benzylgruppen bestehenden Gruppe ausgewählt, wobei mindestens ein organischer Rest R eine mit funktionellen Gruppen substituierte oder unsubstituierte, gesättigte oder ungesättigte Alkylgruppe mit mindestens 6 Kohlenstoffatomen ist.

Bevorzugt sind diejenigen quartären Ammoniumverbindungen, die von Lactamen oder ω-Aminosäuren und deren Derivate abgeleitet sind.

Weitere Vorteile der Erfindung ergeben sich aus der nachfolgenden Beschreibung eines bevorzugten Ausführungsbeispiels unter Bezugnahme auf die beigefügte Zeichnung. In der Zeichnung zeigen:
- Figur 1 einen Aufriß der Rückseite eines erfindungsgemäßen Gassacks; und
- Figur 2 eine schematische Schnittansicht entlang der Linie II-II in Figur 1.

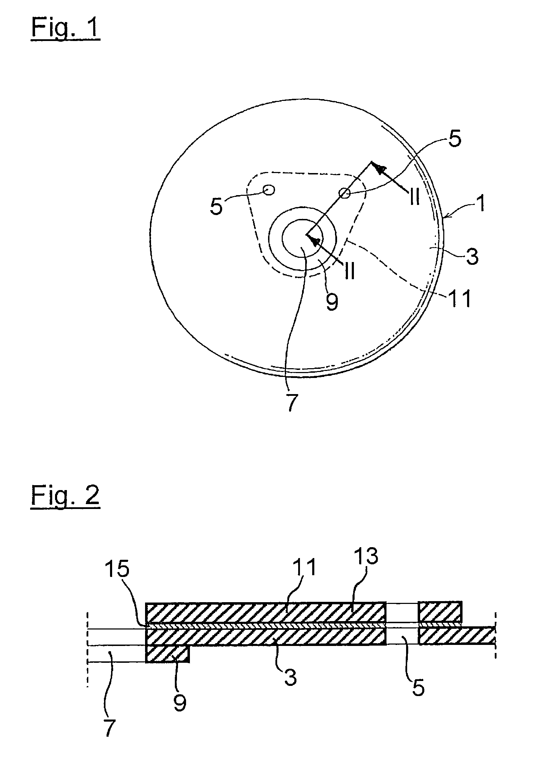

Bei der in den Figuren 1 und 2 gezeigten Ausführungsform umfaßt der Gassack 1 einen im wesentlichen scheibenförmigen, rückseitigen Wandungsteil 3 sowie einen weiteren, im wesentlichen scheibenförmigen Wandungsteil, der in der Figur nicht dargestellt ist und die Vorderseite des Gassacks 1 bildet. Der vorderseitige Wandungsteil und der rückseitige Wandungsteil 3 sind an ihren Umfangsrändern durch Vernähen oder einstückiges Verweben miteinander verbunden. Im rückseitigen Wandungsteil 3 sind außerdem zwei Druckausgleichsöffnungen 5 angebracht, durch die das in den Gassack 1 eingeblasene Gas bei einem Aufprall des Fahrzeuginsassen auf den vorderseitigen Wandungsteil definiert entweichen kann.

Der rückseitige Wandungsteil 3 weist ferner eine Einblasöffnung 7 auf, in der ein Gasgenerator (nicht gezeigt) in bekannter Weise aufgenommen ist. Um die Einblasöffnung herum ist ein Halterring 9 angeordnet, der zur Befestigung des Gassacks 1 bzw. des rückseitigen Wandungsteils 3 an dem Gasgenerator dient. Auf einen an die Einblasöffnung 7 angrenzenden Abschnitt des rückseitigen Wandungsteils 3 des Gassacks 1 ist eine Hitzeschutzvorrichtung 11 aufgeklebt. Die Hitzeschutzvorrichtung 11 ist bei der hier gezeigten Ausführungsform auf die Innenfläche des Wandungsteils 3 aufgeklebt, die den aus dem Gasgenerator ausströmenden heißen Gasen und Partikel direkt ausgesetzt ist. Die Hitzeschutzvorrichtung kann jedoch auch auf die fahrzeugseitige Außenfläche des Wandungsteils 3 aufgeklebt sein. Außerdem können weitere Wandungsabschnitte des Gassacks 1 mit einer Hitzeschutzvorrichtung versehen sein, wie beispielsweise der der Einblasöffnung 7 gegenüberliegende Abschnitt des vorderseitigen Wandungsteils.

Die Hitzeschutzvorrichtung 11 ist erfindungsgemäß aus einem unbeschichteten Gewebe 13 gebildet, das wie die Wandungsteile des Gassacks vorzugsweise aus Polyamid besteht. Bei der in Figur 1 gezeigten Ausführungsform erstreckt sich die Hitzeschutzvorrichtung 11 von der Einblasöffnung 7 bis zu den Druckausgleichsöffnungen 5. Form und Ausdehnung der Hitzeschutzvorrichtung 11 sind jedoch frei wählbar und können von einem Fachmann an die sich aus dem Leistungsprofil des Gasgenerators ergebenden Anforderungen angepaßt werden. Die Hitzeschutzvorrichtung 11 kann außerdem aus einer oder mehreren Lagen des unbeschichteten Gewebes gebildet sein.

Zur Verklebung der Gewebelagen der Hitzeschutzvorrichtung 11 mit dem Wandungsteil 3 des Gassacks 1 und gegebenenfalls miteinander wird erfindungsgemäß ein flammhemmender Klebstoff 15 verwendet, der selbst den notwendigen Flammschutz bereitstellt und das Gewebe des Wandungsteils 3 zuverlässig vor einer Beschädigung durch die aus dem Gasgenerator austretenden heißen Gase und Partikel schützt. Der flammhemmende Klebstoff 15 umfaßt vorzugsweise eine Polymermatrix aus einer Polyurethanzusammensetzung, in der plättchenförmig exfolierte Schichtsilikatpartikel mit einer Dicke von 0,5 bis 2 nm und einem Flächendurchmesser von bis zu 10 µm verteilt sind. Durch das Eincompoundieren von Schichtsilikaten in die Polymermatrix unter polymerspezifischen Verfahrensbedingungen vor, während oder nach der Polymerisation der entsprechenden Monomere, beispielsweise in einem Doppelschnecken-Schmelzextruder bei erhöhter Temperatur, werden die Schichtsilikate exfoliert, so daß sich eine im wesentlichen homogene Verteilung der Schichtsilikatpartikel in der Polymermatrix einstellt. Ein geeigneter Klebstoff kann beispielsweise durch Eincompoundieren von 3 Gew.-Teilen eines hydrophobierten Schichtsilikats (Bentonit, hydrophobiert mit Dimethyldioctadecylammoniumchlorid; Flächendurchmesser >1 µm, Schichtdicke 0,5 bis 2 nm) in 100 Gew.-Teile eines üblichen Polyurethanklebers erhalten werden. Der so modifizierte Polyurethan-Klebstoff hat flammhemmende Eigenschaften und zeigt darüber hinaus eine verbesserte Barrierewirkung gegenüber Gasen und Flüssigkeiten sowie eine verbesserte mechanische Belastbarkeit und Temperaturwechselbeständigkeit.

Der durch Verkleben des unbeschichteten Gewebes 13 der Hitzeschutzvorrichtung 11 mit dem Wandungsteil 3 unter Verwendung des flammhemmenden Klebstoffs 15 erhältliche Gassack 1 ist zuverlässig vor einer Beschädigung durch die auf die Hitzeschutzvorrichtung 11 auftreffenden heißen Gase und Partikel geschützt. Der Gassack 1 ist ferner leicht faltbar und aufgrund der Einsparung von Beschichtungsmaterial auch kostengünstig herstellbar.

Der oben beschriebene Gassack 1 ist insbesondere zur Verwendung in einem Gassackmodul für die Fahrerseite eines Fahrzeuginsassen-Rückhaltesystems vorgesehen. Die Erfindung ist jedoch nicht auf diese Verwendung beschränkt; sie kann auch auf andere Gassackkonfigurationen angewendet werden, beispielsweise auf einen Beifahrer-Gassack oder einen Kopf-Seitengassack.

## Patentansprüche

1. Gassack (1) zur Verwendung in einer Fahrzeuginsassen-Rückhalteeinrichtung, mit einem Wandungsteil (3) aus einem unbeschichteten Gewebe sowie einer auf einen Abschnitt des Wandungsteils (3) aufgebrachten Hitzeschutzvorrichtung (11), wobei die Hitzeschutzvorrichtung (11) aus wenigsten einer Lage eines weiteren unbeschichteten Gewebes (13) gebildet und mit dem Wandungsteil (3) unter Verwendung eines flammhemmenden Klebstoffs (15) verklebt ist.

2. Gassack nach Anspruch 1, **dadurch gekennzeichnet, daß** der flammhemmende Klebstoff eine Polymermatrix mit darin verteilten exfolierten Schichtsilikatpartikeln umfasst, wobei die exfolierten Schichtsilikatpartikel eine Dicke von 0,5 bis 2 nm und einen Flächendurchmesser von bis zu 10 µm aufweisen.

3. Gassack nach Anspruch 2, **dadurch gekennzeichnet, daß** die Schichtsilikatpartikel in einem Anteil von 1 bis 6 Gewichtsteilen pro 100 Gewichtsteilen der Polymermatrix vorliegen.

4. Gassack nach Anspruch 2 oder 3, **dadurch gekennzeichnet, daß** die Schichtsilikatpartikel unter Verwendung von organischen Oniumverbindungen hydrophobiert sind.

5. Gassack nach Anspruch 4, **dadurch gekennzeichnet, daß** die organischen Oniumverbindungen aus der Gruppe der Aminosäuren und Aminosäurederivate ausgewählt sind.

6. Gassack nach einem der Ansprüche 2 bis 5, **dadurch gekennzeichnet, daß** die Schichtsilikatpartikel aus Schichtsilikaten gebildet sind, die aus der aus Montmorrilonit, Saponit, Beidelit, Nontronit, Sauconit, Stevensonit, Hektorit, Bentonit, Vermiculit, Halloysit, Kaolin, Calciummethasilikat, Smektit und Fluorosmektit bestehenden Gruppe ausgewählt sind.

7. Gassack nach einem der Ansprüche 2 bis 6, **dadurch gekennzeichnet, daß** die Polymermatrix eine Zusammensetzung auf der Grundlage von Polyurethan ist.

8. Gassack nach einem der vorhergehenden Ansprüche, **dadurch gekennzeichnet, daß** das unbeschichtete Gewebe des Wandungsteils (3) und/oder das weitere unbeschichtete Gewebe (13) aus Polyamid besteht.
